# EUROPEAN PATENT APPLICATION

(11) **EP 1 635 088 A2**
(43) Date of publication of application: **15.03.2006**
(21) Application number: 05018330.0
(22) Date of filing: 24.08.2005
(51) Int. Cl.: F16H 7/08

(54) **Tensioner**

(30) Priority: 08.09.2004 JP 2004261095
(71) Applicant: Tsubakimoto Chain Co., Osaka 530-0018, (JP)
(72) Inventor: Nishikawa, Takashi c/o Tsubakimoto Chain Co., Kita-ku Osaka 530-0018 (JP)
(74) Representative: Patentanwälte Hosenthien-Held und Dr. Held

(57) **Abstract**

In a tensioner (1) having a plunger (8) pivotably fitted into a plunger accommodation hole (12) in a tensioner housing (7) with the front end portion of the plunger (8) biased outward so as to be protruded, the tensioner housing (7) is formed of a cast product or an aluminum base metallic material, the plunger accommodation hole (12) is not subjected to surface treatment and the plunger (8) is subjected to surface treatment, which forms a crystalline manganese phosphate film.

## Description

The present invention relates to a tensioner for use in applying an appropriate tension to a timing chain in a vehicle engine, specifically relates to a tensioner in which antiseizing properties between the plunger and the tensioner housing were improved.

As a transmission device for transmitting rotation between a crankshaft and a camshaft in an autombile engine, a chain transmission device, in which a timing chain is wrapped between sprockets respectively secured to the crankshaft and the camshaft, has been used in general purpose. And in this chain transmission device, in order to impart appropriate pressing force to a slack side of the chain to apply appropriate tension to the chain so that vibration during running of the chain is prevented, and to follow the elongation of the chain to hold appropriate pressing force, a tensioner has been used. In the tensioner, a plunger is protruded from the front end of the tensioner housing by the biasing of a spring. The front end of this plunger presses the back surface near a pivotable end of a tensioner lever pivotably supported on an engine body side, so that a shoe surface of the tensioner lever is brought in sliding contact with the slack side of the chain to apply tension to the chain.

As a material of the tensioner housing, which is a principal component of such a tensioner a flake graphite cast iron called as "gray cast iron" having characteristics such as excellent wear resistance, vibration absorbability, machinability and the like has been usually used. Further, to more lighten weight than the gray cast iron and also to improve antiseizing a technique has been proposed in which the tensioner housing is formed of an aluminum base metallic material such as aluminum, aluminum alloy or the like, and the surface of the tensioner housing is subjected to hard anodization to form a hard alumite layer on it, and the alumite layer is subjected to secondary electrolysis in an ammonium tetrathiomolybdate solution to precipitate molybdenum bisulfide in micropores in the layer, so called surface treatment called as "Kashima Coat" ® is performed (see for example Japanese Patent Publication No. 3226030).

However, there was a defect that the "gray cast iron", which has been used as a crude material of the tensioner housing of a conventional tenioner, is heavy in the weight. Further, there was another defect that the crystal of graphite contained in gray cast iron is elongated and when force is applied on the tip of the crystal a crack is easy to generate so that strength of the housing is lowered.

Further, in a case where Kashima Coat ® treatment is performed, there was a defect that the production steps becomes complicated thereby not only to increase cost but also to add working tolerance and add tolerance of the film thickness due to Kashima Coat ® treatment, so that these production steps cannot be applied to a tensioner having sever tolerance. Further, in a case where the tensioner housing has a complicated shape, or in a case where it has micropores, there was a problem that uniform surface treatment cannot be performed in the Kashima Coat ® treatment.

Further, in a case of a ratchet type tensioner in which a plunger is always biased by a plunger spring, a ratchet pawl body having ratchet pawls is pivotably supported on a ratchet shaft provided in the tensioner housing and the ratchet pawls engage with ratchet teeth engraved on a plunger side surface so that the backward displacement of the plunger is prevented, particularly the following problems have been pointed.

In the case of a ratchet type tensioner, since a side force (force acting at right angle to an advancing direction of the plunger) acts in a sliding surface between a plunger and a plunger accommodation hole of a tensioner housing, which is on the opposite side to a side where the ratchet pawls engage with the ratchet teeth when the plunger is pushed into by a chain tension, the friction resistance in this sliding surface is increased. Thus, the vibration of the plunger, which is generated during engine rotation, increases friction between the tensioner housing and the plunger so that the both temperatures of the tensioner housing and the plunger are also increased to deform them. In the worst case, both of the tensioner housing and the plunger are seized so that a function of the tensioner is lost. Particularly, in a case where the tensioner is used under high load, microstroke and high frequency, the generation of seizing has been a matter of concern.

Thus, the object of the present invention is to provide a tensioner, which is obtained at low cost and has excellent antseizing properties and endurance.

To attain said object a tensioner, having a plunger pivotably fitted into a plunger accommodation hole in a tensioner housing with the front end portion of the plunger biased outward so as to be protruded, is characterized in that the tensioner housing is formed of a cast product or an aluminum base metallic material, the plunger accommodation hole is not subjected to surface treatment and the plunger is subjected to surface treatment, which causes a crystalline manganese phosphate film to form.

Here, the surface treatment to generate a crystalline manganese phosphate film generally means a treatment called as a LUBRITE treatment and produces a thin manganese phosphate base passive state film having a monoclinic system crystalline structure and a thickness of about 0.5 to 15 micron on an iron steel surface of the plunger by an immersion process.

Since a tensioner, having a plunger pivotably fitted into a plunger accommodation hole in a tensioner housing with the front end portion of the plunger biased outward so as to be protruded, is characterized in that the tensioner housing is formed of a cast product or an aluminum base metallic material, the plunger accommodation hole is not subjected to surface treatment and the plunger is subjected to surface treatment, which causes a crystalline manganese phosphate film to form, the self-lubricating property, which the crystalline manganese phosphate film has, allows the suppression of seizing between the plunger and the tensioner housing. Further, in the present invention not a tensioner housing side but a plunger side having a comparatively simple shape and a small size is subjected to surface treatment to form a crystalline manganese phosphate film, whereby it becomes possible to shorten the treatment time. Further, the crystalline manganese phosphate film allows the covering of defects or ununiformity in the sliding surface so that the running-in process of the sliding surface is speedily effected and the noise reduction from the sliding portions is performed.

An embodiment of the present invention will be described with reference to drawings based on an example.

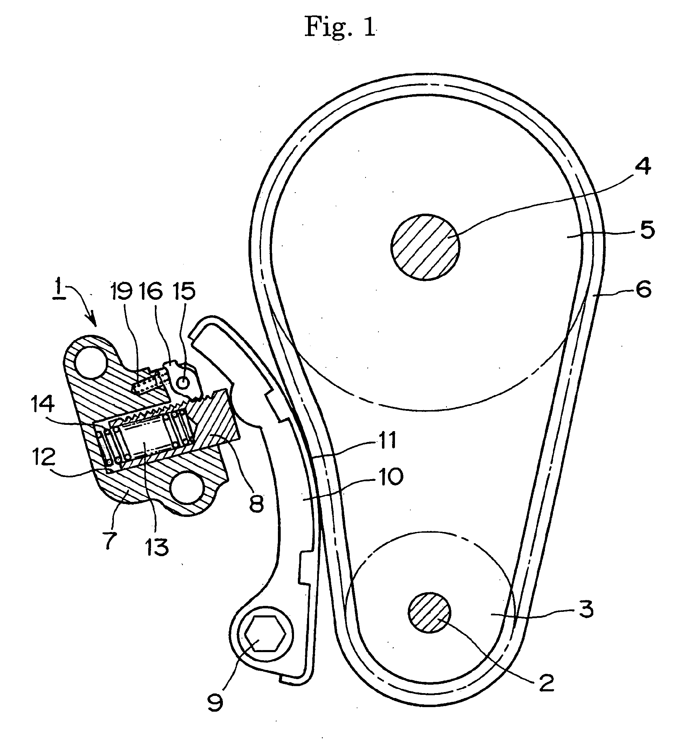

- FIG. 1: is a cross-sectional view showing one example of a ratchet type tensioner, and
- FIG. 2: is a partially enlarged cross-sectional view of the plunger in FIG. 1 near the front end portion thereof.

A tensioner 1 is attached to an engine body on a slack side of a chain e.g., a timing chain, wrapped between a driving sprocket 3 rotated with a crankshaft 2 of an engine and a driven sprocket 5 fixed onto a camshaft 4.

In this tensioner 1, a plunger 8 is extendably and retractably protruded from the front surface of a tensioner housing 7. And the front end surface 8A of this plunger 8 presses a back surface of a tensioner lever 10 pivotably supported by a supporting shaft 9 on the engine body side, near the pivoting end of the tensioner body 10. As a result, a shoe surface 11 of the tensioner lever 10 makes sliding contact with a slack side of the chain 6 to apply appropriate tension to the chain 6.

In the tensioner housing 7 is formed a plunger accommodation hole 12 into which the plunger 8 is extendably and retractably fit-inserted. In the plunger 8 is formed a hollow portion 13 opened on an end surface opposite to a bottom portion of the plunger accommodation hole 12. And between the bottom surface of the hollow portion 13 and the bottom portion of the plunger accommodation hole 12 opposite to the bottom surface is provided a plunger spring 14. And this plunger spring 14 always biases the plunger 8 so that the front end of the plunger 8 is protruded from the tensioner housing 7. This tensioner housing 7 is formed of a cast product or an aluminum base metallic material. On the other hand, the plunger is made of iron steel, and on the surface of the plunger 8 is formed a thin thick manganese phosphate base passive film having a monoclinic system crystalline structure and a thickness of about 0.5 to 15 microns by the above-mentioned lieu-bright treatment.

On to the tensioner housing 7 is pivotably supported a ratchet pawl body 16 with a ratchet shaft 15. And on this ratchet pawl body 16 is formed ratchet pawls 18, which engage with ratchet teeth T engraved on a side surface of the plunger 8.

To the ratchet pawl body 16 is always applied a rotating bias force around the ratchet shaft 15 in a direction where the ratchet pawls 17 and 18 engage with the ratchet teeth T of the plunger 8 by a ratchet spring 19 provided between the ratchet pawl body 16 and the tensioner housing 7. And this tensioner has a structure that the engagement between these ratchet pawls 17, 18 and the ratchet teeth T blocks the backward displacement of the plunger 8.

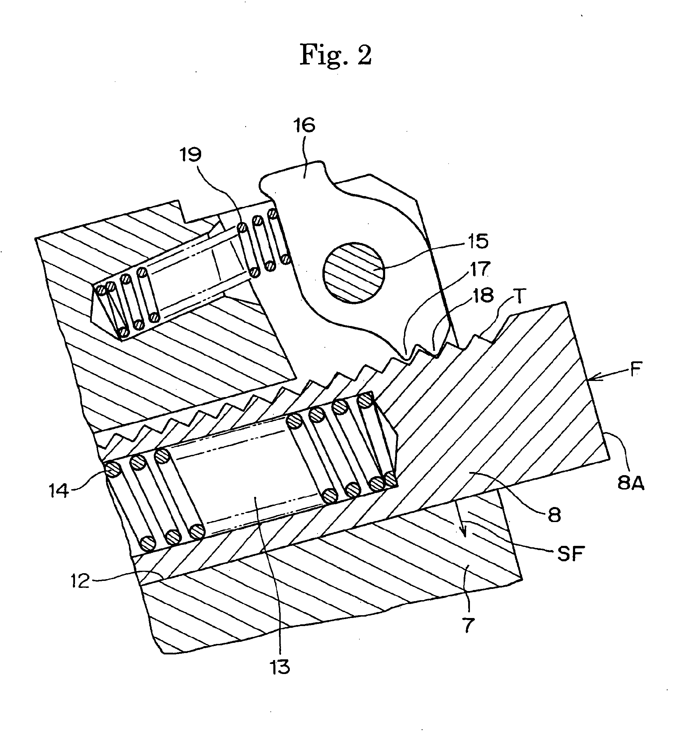

Next, the results of seizing tests performed with respect to a ratchet type tensioner according to the present invention will be described. The seizing tests were performed by use of the same ratchet type tensioner as shown in FIG. 2. The test conditions are as follows.
1) Oil is supplied to space surrounded by the hollow portion 13 formed in the plunger and the plunger accommodation hole 12 formed in the tensioner housing. In this case the conditions of the supplied oil were an oil temperature of 80°C and an oil pressure of 0.30 MPa.
2) By use of a vibration testing machine, displacements of ±0.1 mm were imparted to the front end surface 8A of the plunger by 200 times per second (200 Hz) and total 1.0 × 10⁷ times, that is for 50,000 seconds (about 14 hours).
3) After that properties of a plunger side surface particularly an area on which the side force (force, which acts at right angle to an advancing direction of the plunger shown by SF in FIG. 2) were observed and the presence and absence of seizing were examined.

The above-mentioned tests 1) to 3) were carried out with respect to LUBRITE treated products of the present invention and conventional products. As a result in the conventional products seizing was observed, but in the products of the present invention no seizing was observed.

### REFERENCE NUMBERS

- 1: Ratchet type tensioner
- 2: Crankshat
- 3: Driving sprocket
- 4: Camshaft
- 5: Driven sprocket
- 6: Chain
- 7: Tensioner housing
- 8: Plunger
- 8A: Front end portion (of the plunger)
- 9: Supporting shaft (of the tensioner lever)
- 10: Tensioner lever
- 11: Shoe surface (of the tensioner lever)
- 12: Plunger accommodation hole
- 13: Hollow portion
- 14: Plunger spring
- 15: Ratchet shaft
- 16: Ratchet pawl body
- 17, 18: Ratchet pawl
- 19: Ratchet spring
- T: Ratchet teeth
- SF: Side force

## Claims

1. Tensioner having a plunger (8) pivotably fitted into a plunger accommodation hole (12) in a tensioner housing (7) with the front end portion of the plunger (8) biased outward so as to be protruded, **characterized in that**
the tensioner housing (7) is formed of a cast product or an aluminum base metallic material,
the plunger accommodation hole (12) is not subjected to surface treatment and
the plunger (8) is subjected to surface treatment, which causes a crystalline manganese phosphate film to form.

2. Tensioner according to claim 1, **characterized in that** the plunger (8) is made of iron steel.

3. Tensioner according to claim 1 or 2, **characterized in that** the plunger (8) has a manganese phosphate base passive film having a monoclinic system crystalline structure.

4. Tensioner according to any of claims 1 to 3, **characterized in that** the plunger (8) has a manganese phosphate base passive film having a thickness of 0.5 to 15 microns.
